# FASCICULE DE BREVET EUROPEEN

(11) **EP 3 899 458 B1**
(45) Date de publication et mention de la délivrance du brevet: **28.09.2022**
(21) Numéro de dépôt: 19820749.0
(22) Date de dépôt: 13.12.2019
(51) Int. Cl.: G01J 3/02, G02B 3/00

(54) **INSTRUMENT A PLUSIEURS VOIES OPTIQUES**
INSTRUMENT MIT MEHREREN OPTISCHEN KANÄLEN
INSTRUMENT WITH A PLURALITY OF OPTICAL CHANNELS

(30) Priorité: 19.12.2018 FR 1873292
(43) Date de publication de la demande: 27.10.2021
(73) Titulaire: Office National d'Etudes et de Recherches Aérospatiales, 91120 Palaiseau (FR)
(72) Inventeur: DRUART, Guillaume, 91120 Palaiseau (FR); DE LA BARRIERE, Florence, 93390 Clichy sous Bois (FR)
(74) Mandataire: Plasseraud IP
(86) Numéro de dépôt international: PCT/EP2019/085045
(87) Numéro de publication internationale: WO 2020/126888

(56) Documents cités:
- WO-A1-01/79916
- WO-A2-2015/015493
- FR-A1- 3 053 464
- US-A1- 2008 204 744

## Description

La présente invention concerne un instrument à plusieurs voies optiques, qui incorpore un composant optique monolithique à plusieurs voies permettant de diviser un faisceau lumineux incident en plusieurs faisceaux émergents qui sont déviés dans des directions différentes.

De nombreuses applications d'imagerie ou d'analyse spectrométrique nécessitent de disposer en parallèle plusieurs voies optiques, entre une même pupille d'entrée optique et un même capteur d'image. Une telle configuration peut être motivée par des contraintes d'encombrement du système optique utilisé, de facilité d'utilisation, d'économie d'assemblage lors de sa production, et/ou de prix de revient. En effet, le système optique peut alors être monobloc, compact et facile à diriger vers une scène à imager et/ou à analyser spectralement.

Une telle configuration nécessite de reproduire une même portion d'image avec des décalages transversaux sur la surface d'un capteur d'image unique. Or il est connu que de tels décalages d'image peuvent être produits de plusieurs façons, notamment en disposant des miroirs comme décrit dans le document WO 2016/092236. Mais la disposition d'un tel diviseur de faisceau à miroirs nécessite d'augmenter les dimensions du système optique. Une autre approche consiste à utiliser des prismes diviseurs de faisceau dans une pupille du système optique. Cela nécessite alors de placer le diviseur de faisceau à un endroit où les faisceaux arrivent en ondes planes, c'est-à-dire soit au niveau d'une pupille d'entrée du système, soit à la sortie d'un système afocal. Dans ces conditions, le composant qui réalise la fonction de division de faisceau doit être conçu spécialement pour chaque système optique, car le diamètre de la pupille d'entrée dépend de la longueur focale de ce système optique, ou bien le système optique est encombrant à cause de l'ajout d'un système afocal. Dans le cas où un faisceau à ondes sphériques traverse un tel composant diviseur de faisceau, des images qui sont produites sur un photodétecteur ne peuvent pas être mises au point, car la surface qui contient chacune de ces images forme un angle avec la surface du photodétecteur, et cet angle est différent d'une image à l'autre. En particulier, des prismes qui sont éclairés par des ondes sphériques - et donc non planes - produisent des aberrations de courbure de champ. Cela provoque une dégradation de la netteté de chaque image sur une partie importante de celle-ci. Enfin, une autre solution consisterait à utiliser des lentilles dans le trajet d'un faisceau à ondes sphériques, qui sont décalées latéralement entre elles. De cette manière, la puissance optique de chaque lentille peut permettre de rapprocher le plan de meilleure mise-au-point, et d'orienter des faisceaux qui ont traversé des lentilles différentes vers des zones séparées de la surface du photodétecteur. Mais pour obtenir des décalages d'images transversaux qui sont suffisants, l'utilisation de lentilles à valeurs non-nulles de puissance optique nécessite de modifier dans une mesure importante la longueur focale d'un objectif du système optique pour maintenir identique une longueur focale globale du système optique. Cela nécessite en outre d'augmenter la longueur de la partie du système optique qui produit le faisceau à ondes sphériques, c'est-à-dire de l'objectif. Cela provoque un encombrement plus important et nécessite des optiques à plus grands diamètres. Le système optique ne répond alors plus aux exigences de compacité de nombreuses applications. Le document FR 3 053 464 A1 divulgue un instrument à plusieurs voies optiques, ayant un champ de vue qui est commun aux dites voies optique.

Dans ces circonstances, un but de la présente invention consiste à proposer un nouveau diviseur de faisceau qui ne présente pas les inconvénients cités ci-dessus, ou pour lequel ces inconvénients sont réduits. Plus particulièrement, l'invention vise à fournir un compromis amélioré entre des valeurs de longueur focale qui ne sont pas trop grandes et des courbures de champ qui ne sont pas trop importantes à la surface d'un photodétecteur commun à toutes les voies optiques.

Un autre but de l'invention est de proposer un instrument à plusieurs voies optiques et à un seul capteur d'image commun à toutes ses voies, qui soit compact, facile à manipuler et à étalonner.

Pour atteindre l'un au moins de ces buts ou d'autres, un aspect de l'invention propose un instrument à plusieurs voies optiques tel que défini dans la revendication 1, ayant un champ de vue qui est commun à ces voies optiques, dans lequel les voies optiques sont disposées en parallèle, chacune entre une entrée optique de l'instrument qui est commune aux voies optiques, et un photodétecteur matriciel qui est aussi commun aux voies optiques, avec une portion de ce photodétecteur matriciel qui est dédiée à chaque voie optique de l'instrument séparément de chaque autre voie optique. Ainsi, plusieurs images de la scène sont formées simultanément par l'instrument sur le photodétecteur matriciel : une image séparément par chaque voie optique. L'instrument de l'invention comprend un composant optique monolithique à plusieurs voies qui est constitué d'une portion d'un matériau transparent pour un rayonnement d'utilisation, cette portion étant contenue entre deux faces du composant qui sont tournées chacune vers un côté opposé à l'autre face, de sorte que le rayonnement incident sur l'une des deux faces traverse la portion entre les deux côtés et ressorte par l'autre face. Autrement dit, le composant de l'invention possède une configuration de lame transmissive. Une première des deux faces du composant est constituée par une première surface dioptrique qui possède un axe optique. L'autre face du composant, dite seconde face, comprend quant à elle plusieurs secondes surfaces dioptriques qui sont juxtaposées sans recouvrement dans cette seconde face. Chaque seconde surface dioptrique possède alors un autre axe optique séparément de chaque autre seconde surface dioptrique, l'axe optique de l'une au moins de ces secondes surfaces dioptriques étant décalé par rapport à l'axe optique de la première surface dioptrique. De plus, les secondes surfaces dioptriques sont réparties dans la seconde face du composant de sorte qu'un rayon lumineux qui traverse la première surface dioptrique ressorte du composant par au plus une des secondes surfaces dioptriques, chaque seconde surface dioptrique formant ainsi avec une portion respective de la première surface dioptrique une voie optique de transmission qui est séparée de chaque autre seconde surface dioptrique. Le composant optique monolithique à plusieurs voies est disposé de sorte que chaque voie optique de transmission de ce composant soit dédiée à une des voies optiques de l'instrument.

L'instrument comprend en outre un objectif et un module de détection à plusieurs voies optiques, l'objectif comprenant au moins une lentille qui est commune à toutes les voies optiques du module de détection, le module de détection comprenant le composant optique et le photodétecteur matriciel, et étant couplé à l'objectif de sorte que le composant optique soit situé dans une pupille de sortie de l'objectif, et de sorte qu'une scène qui est contenue dans le champ de vue de l'instrument soit imagée à travers l'objectif et le composant optique, pour chaque voie optique, sur le photodétecteur matriciel.

Dans un instrument qui est conforme à l'invention, le côté de la première surface dioptrique du composant optique monolithique peut être le côté d'arrivée d'un faisceau du rayonnement, et le côté des secondes surfaces dioptriques de ce composant peut être le côté de sortie des faisceaux de rayonnement respectifs de toutes les voies optiques. Toutefois, dans d'autres instruments qui sont aussi conformes à l'invention, le côté des secondes surfaces dioptriques peut être à l'inverse le côté d'arrivée d'un faisceau du rayonnement, et le côté de la première surface dioptrique est alors le côté de sortie des faisceaux de rayonnement de toutes les voies optiques.

Selon une première caractéristique de l'invention, des valeurs respectives de courbure de la première surface dioptrique et de chaque seconde surface dioptrique du composant optique monolithique sont non-nulles en au moins un point respectif de chacune des première et secondes surfaces dioptriques, de sorte que chacune de la première et des secondes surfaces dioptriques modifie individuellement une convergence d'un faisceau de rayonnement qui la traverse au point correspondant à courbure non-nulle.

De plus, selon une seconde caractéristique de l'invention, chaque voie optique du composant optique monolithique dont l'axe optique de seconde surface dioptrique est décalé par rapport à l'axe optique de la première surface dioptrique produit un pouvoir de déviation prismatique non-nul qui est effectif pour le faisceau de rayonnement transmis par cette voie optique entre les deux côtés du composant. En outre, au moins une parmi la valeur et l'orientation du pouvoir de déviation prismatique est différente entre au moins deux des voies optiques du composant.

Ainsi, le composant optique monolithique à plusieurs voies qui est utilisé dans l'instrument de l'invention, désigné dans la suite par «composant optique» de façon plus courte, peut être utilisé comme diviseur de faisceau. En particulier, le faisceau qui est incident sur la première ou seconde face de ce composant optique, et qui est commun à toutes les voies optiques, peut être à ondes sphériques, c'est-à-dire un faisceau de rayonnement dont les fronts d'onde sont des portions de sphères.

Si l'une des secondes surfaces dioptriques du composant optique possède une courbure qui est identique à celle de la première surface dioptrique dans l'une des voies optiques, le composant possède une puissance optique qui est nulle pour cette voie optique, mais il peut posséder néanmoins un pouvoir de déviation prismatique qui n'est pas nul pour cette même voie optique.

De préférence, des valeurs respectives de courbure de la première surface dioptrique et de chaque seconde surface dioptrique du composant optique peuvent être telles que ce composant possède, séparément pour chaque voie optique, une puissance optique non-nulle qui est effective pour le faisceau de rayonnement transmis par cette voie optique entre les deux côtés du composant.

D'une façon connue de l'Homme du métier, la puissance optique d'un composant optique est un effet modificateur de la convergence - ou de la divergence - d'un faisceau de rayonnement, qui est effectif entre une entrée et une sortie du composant. La puissance optique résulte d'un effet de réfraction lumineuse associé à des valeurs de courbure des surfaces réfractives qui sont traversées par chaque rayon lumineux.

La puissance optique est différente par principe du pouvoir de déviation prismatique d'un composant optique. Le pouvoir de déviation prismatique est un effet modificateur de l'inclinaison du faisceau de rayonnement, effectif aussi entre l'entrée et la sortie du composant. Le pouvoir de déviation prismatique résulte encore de l'effet de réfraction lumineuse, mais lorsqu'il est associé à des plans moyens des surfaces réfractives qui ne sont pas parallèles entre eux.

Dans le composant optique de l'instrument de l'invention, pour l'une au moins des voies optiques qui est décalée transversalement par rapport à l'axe optique de la première surface dioptrique, le plan moyen de la seconde surface dioptrique de cette voie optique peut former un angle non-nul avec un plan moyen qui est déterminé pour la première surface dioptrique dans une portion de celle-ci effective pour la même voie optique. Le pouvoir de déviation prismatique résulte alors de cet écart angulaire entre les plans moyens, et une valeur non-nulle de puissance optique du composant dans la voie optique concernée résulte d'une différence de courbure entre les première et seconde surfaces dioptriques à l'intérieur de cette voie.

Le composant optique peut ainsi combiner, pour chacune de ses voies optiques qui est décalée par rapport à l'axe optique de la première surface dioptrique, une puissance optique non-nulle et un pouvoir de déviation prismatique non-nul. Cette combinaison permet de réaliser un compromis pour chaque voie optique, entre une valeur de longueur focale qui n'est pas trop grande pour un système d'imagerie qui incorpore le composant, et une courbure de champ qui n'est pas trop importante dans un plan d'image qui est commun à toutes les voies optiques. Grâce à cette dernière caractéristique, le composant optique peut être associé, dans le module de détection à plusieurs voies de l'instrument, au photodétecteur matriciel qui est commun à toutes les voies optiques. Le module de détection peut alors être compact tout en possédant plusieurs voies optiques.

En outre, un tel module de détection peut être combiné avec des objectifs différents, formant par exemple une gamme d'objectifs avec des valeurs différentes de longueur focale. Pour cela, le module de détection peut être assemblé avec chacun des objectifs de façon interchangeable, chaque fois de sorte que le composant optique de l'invention soit situé dans une pupille de sortie de l'objectif.

De façon générale pour l'invention, l'une au moins de la première surface dioptrique et de chaque seconde surface dioptrique du composant optique peut être une surface de Fresnel. Alternativement, ce peut être une surface qui est dépourvue de sauts et de lignes d'angle, c'est-à-dire être une surface continue et continûment dérivable. En outre, la première surface dioptrique et/ou l'une au moins des secondes surfaces dioptriques du composant optique peut (peuvent) être asphérique(s). De telles formes asphériques permettent notamment de réduire des aberrations optiques et/ou des aberrations de décentrement qui sont causées par l'inclinaison du faisceau de rayonnement émergent de chaque voie optique dont l'axe optique de seconde surface dioptrique est décalé transversalement par rapport à celui de la première surface dioptrique.

De façon générale, l'une au moins parmi la première surface dioptrique et les secondes surfaces dioptriques du composant optique peut être de type surface libre, c'est-à-dire dépourvue d'axe de symétrie de révolution et dépourvue de centre de symétrie. Une telle surface est dite surface libre, et connue sous l'appellation Freeform^{®}.

Alternativement, chaque première et/ou seconde surface dioptrique du composant optique peut être à symétrie circulaire, notamment être une portion de sphère, ou peut être une portion de surface conique.

De façon préférée, la première surface dioptrique et chaque seconde surface dioptrique du composant optique peuvent avoir des centres de courbure respectifs qui sont situés d'un même côté du composant. Par exemple, lorsque les centres de courbure respectifs sont du côté de la première surface dioptrique du composant, cette première surface dioptrique possède un effet de lentille divergente pour un faisceau de rayonnement qui est incident sur cette première surface dioptrique, et chaque seconde surface dioptrique possède un effet de lentille convergente. En outre, les valeurs respectives de courbure de la première surface dioptrique et de chaque seconde surface dioptrique peuvent être sélectionnées pour que le composant produise un effet de lentille convergente dans chacune de ses voies optiques.

Le composant optique étant monolithique, son assemblage au sein de l'instrument optique à voies multiples peut être simple et rapide. Notamment, un ajustement spécifique de la forme d'une ou plusieurs des secondes surfaces dioptriques peut permettre de réaliser une mise au point qui est identique pour les voies optiques concernées. Le prix de revient de l'instrument optique peut ainsi être réduit.

En outre, le composant optique peut avoir des dimensions réduites, notamment une faible épaisseur, si bien qu'il peut posséder une capacité calorifique qui est faible. Il peut ainsi être refroidi facilement, notamment pour être utilisé dans un instrument de détection qui est sensible dans le domaine infrarouge thermique.

Enfin, le composant optique qui est utilisé dans l'instrument de l'invention peut être fabriqué par un procédé d'usinage-diamant, par moulage ou par photolithographie, en fonction de son matériau et des formes de ses surfaces dioptriques. Différents modes de réalisation de l'invention sont définis dans les revendications dépendantes.

L'une au moins des caractéristiques additionnelles suivantes peut être utilisée, seule ou en combinaison de plusieurs d'entre elles :
- l'axe optique de chaque seconde surface dioptrique du composant optique peut être parallèle à l'axe optique de sa première surface dioptrique ;
- deux des voies optiques du composant optique dont les axes optiques respectifs de secondes surfaces dioptriques sont décalés symétriquement par rapport à l'axe optique de la première surface dioptrique, peuvent avoir des puissances optiques qui sont égales, et avoir des pouvoirs de déviation prismatique qui sont égaux en valeurs absolues mais orientés symétriquement par rapport à l'axe optique de la première surface dioptrique ;
- les secondes surfaces dioptriques du composant optique peuvent être juxtaposées dans la seconde face du composant pour former une matrice 2 x 2, 2 x 3, 3 x 3, 3 x 4, ou 4 x 4 ;
- le matériau constitutif du composant optique peut être organique, notamment à base de polycarbonate, de polyméthyl-méthacrylate, de copolymère cyclo-oléfine, de polyéthylènimine, de polyéther-sulfone, de polyamide-12, ou être à base de silice fondue, lorsque le rayonnement d'utilisation comprend des composantes spectrales dont les longueurs d'onde sont comprises entre 0,36 µm (micromètre) et 2 µm ;
- le matériau constitutif du composant optique peut être un halogénure d'alcalin, ou «alkalide» en anglais, tel que le bromure de potassium, lorsque le rayonnement d'utilisation comprend des composantes spectrales dont les longueurs d'onde sont comprises entre 0,36 µm et 14 µm ;
- le matériau constitutif du composant optique peut être à base de matériaux non-ferreux tels que le germanium, le silicium, le sulfure de zinc, le séléniure de zinc, l'arséniure de gallium, ou peut être un verre à base de chalcogénure, ou encore être à base de polyéthylène, lorsque le rayonnement d'utilisation comprend des composantes spectrales dont les longueurs d'onde sont comprises entre 0,36 µm et 14 µm ;
- le rayon de courbure de la première surface dioptrique du composant optique peut être compris entre 30 mm (millimètre) et 600 mm en valeur absolue, et le rayon de courbure de chaque seconde surface dioptrique du composant peut être compris entre 5 mm et 300 mm en valeur absolue ;
- le pouvoir de déviation prismatique de chaque voie optique du composant optique, dont l'axe optique de seconde surface dioptrique est décalé par rapport à l'axe optique de la première surface dioptrique, peut être compris entre 1 ° (degré) et 40° en valeur absolue ;
- chaque seconde surface dioptrique du composant optique peut posséder une aire qui est comprise entre 7 mm² et 900 mm² ; et
- le composant optique peut comprendre en outre au moins un filtre spectral qui est disposé pour filtrer les rayons lumineux qui sont transmis par l'une des voies optiques. Avantageusement, ce filtre spectral peut être disposé sur la seconde surface dioptrique de la voie optique concernée. De préférence, au moins deux des secondes surfaces dioptriques peuvent supporter des filtres spectraux respectifs, un filtre par seconde surface dioptrique, ces filtres ayant des caractéristiques spectrales de filtrage qui sont différentes entre deux de ces secondes surfaces dioptriques.

L'instrument de l'invention peut notamment former une unité de saisie d'images multispectrales, ou une partie d'un spectromètre, ou une partie d'un système d'imagerie tridimensionnelle.

Avantageusement, l'objectif et le module de détection peuvent être couplés l'un à l'autre de façon amovible, de sorte que l'objectif puisse être remplacé par un autre, notamment pour varier la valeur de longueur focale globale de l'instrument.

Lorsque l'instrument forme sur le photodétecteur matriciel plusieurs images d'un même objet qui est situé dans le champ de vue de l'instrument, un rayonnement issu d'un point de cet objet peut présenter un front d'onde qui est courbe au niveau de celle de la première et de la seconde face du composant optique qui est tournée vers l'objectif.

L'instrument peut comprendre en outre un limiteur de champ angulaire disposé pour filtrer des rayons lumineux qui traversent le composant optique en fonction de leur inclinaison par rapport à l'axe optique de la première surface dioptrique, de sorte que les inclinaisons des rayons lumineux qui sont incidents sur le composant optique soient sélectivement inférieures à un seuil d'inclinaison déterminé par le limiteur de champ angulaire. Alternativement ou en combinaison, l'instrument peut comprendre au moins un ensemble de parois séparatrices qui est disposée entre le composant optique et le photodétecteur matriciel, pour isoler des rayonnements qui sont transmis par des voies optiques différentes.

Avantageusement aussi pour certaines applications, un masque à ouvertures peut en outre être utilisé dans l'instrument, ce masque possédant une ouverture par voie optique pour limiter une section transversale de cette voie optique, et/ou masquer des zones du composant optique qui ne sont pas utiles pour la fonction d'imagerie de l'instrument, et/ou supprimer des images parasites formées par du rayonnement n'ayant pas traversé les zones utiles du composant optique, et/ou déterminer des pupilles respectives des voies optiques de l'instrument. Par zones utiles du composant optique, on entend les secondes surfaces dioptriques, à l'exclusion de zones de séparation qui peuvent exister dans la seconde face du composant optique entre des secondes surfaces dioptriques qui sont voisines dans cette seconde face. Ces zones de séparation sont donc des zones non-utiles pour la fonction d'imagerie de l'instrument, de même qu'une zone périphérique pouvant exister dans la seconde face du composant optique, autour de l'ensemble des secondes surfaces dioptriques. Lorsque le composant optique est situé dans la pupille de sortie de l'objectif, chaque ouverture de ce masque possède la fonction de diaphragme d'ouverture pour la voie optique concernée.

Pour certaines applications de l'instrument de l'invention, chacune de ses voies optiques peut comprendre au moins un filtre, en plus de la portion correspondante du photodétecteur matriciel et de la voie correspondante du composant optique. Ce filtre peut déterminer une bande spectrale de transmission de la voie optique concernée de l'instrument, qui est différente de la bande spectrale de transmission d'au moins une des autres voies optiques de l'instrument. Alors, dans ce cas, deux des secondes surfaces dioptriques qui sont associées à des filtres différents dans leurs voies optiques respectives, peuvent avoir des courbures qui sont différentes pour compenser un chromatisme longitudinal effectif entre deux longueurs d'onde de rayonnement qui sont transmises chacune séparément par un des deux filtres.

Encore en fonction de l'application, l'instrument de l'invention peut comprendre en outre une combinaison d'un cryostat et d'une machine à froid. A l'intérieur du cryostat, le photodétecteur matriciel est disposé sur un support appelé couramment table froide ou doigt froid, qui est couplé thermiquement à la machine à froid. En outre, le composant optique monolithique à plusieurs voies peut être entouré latéralement par un écran, appelé écran froid, qui est aussi en contact thermique avec le support du photodétecteur matriciel. Cet écran froid peut servir de monture pour le composant, et/ou chaque filtre utilisé, et/ou le masque, et/ou les parois séparatrices. Il peut aussi former le limiteur de champ angulaire.

D'autres particularités et avantages de la présente invention apparaîtront dans la description ci-après d'un exemple de réalisation non limitatif, en référence aux dessins annexés, dans lesquels :
[FIG. 1a] et [FIG. 1b] sont deux vues en perspective d'un composant optique qui peut être utilisé dans un instrument conforme à l'invention, à partir de deux côtés opposés du composant ;
[FIG. 2] est une vue en plan d'un autre composant optique qui peut être utilisé dans un instrument conforme à l'invention ;
[FIG. 3a] et [FIG. 3b] sont des vues en coupe de deux instruments qui sont conformes à l'invention, et qui incorporent chacun un composant optique conforme à [FIG. 2] ; et
[FIG. 4] est une vue en coupe détaillée d'une partie des instruments de [FIG. 3a] et [FIG. 3b].

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

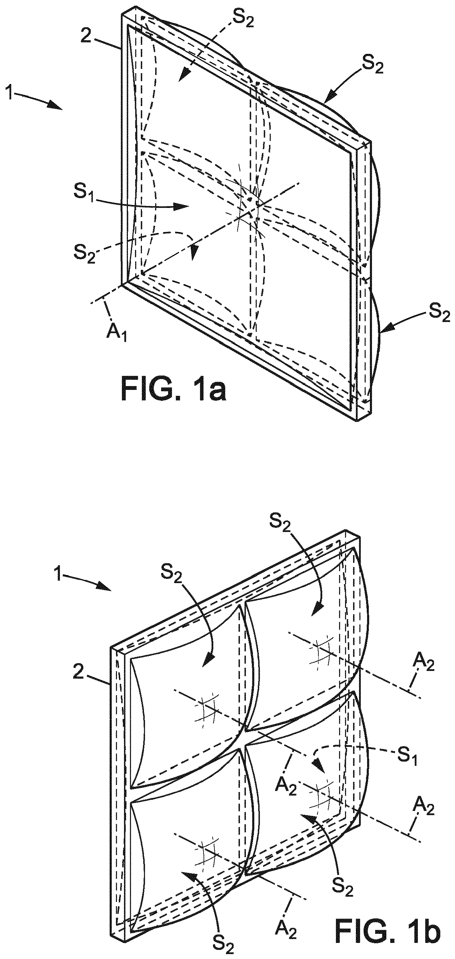

En référence à [FIG. 1a] et [FIG. 1b], un composant optique 1 qui est utilisé pour l'invention peut être en germanium, afin d'être transparent pour du rayonnement électromagnétique de longueur d'onde comprise entre 2 µm et 14µm. Le composant 1 possède deux faces opposées, qui peuvent être reliées par une nervure périphérique 2. A titre d'illustration, le composant 1 de [FIG. 1a] et [FIG. 1b] a un pourtour carré. La première face du composant 1, qui est directement visible sur [FIG. 1a], est formée par une surface dioptrique S₁, qui peut être sphérique ou asphérique par exemple. A₁ désigne l'axe optique de la surface dioptrique S₁. La seconde face du composant 1, qui est directement visible sur [FIG. 1b], peut être formée par quatre surfaces dioptriques S₂ qui sont juxtaposées en une matrice 2 x 2, et qui peuvent être chacune sphérique ou asphérique encore par exemple. A₂ désigne l'axe optique respectif de chaque surface dioptrique S₂. Chaque axe optique A₂ peut être parallèle à l'axe optique A₁, et décalé latéralement par rapport à ce dernier. Lorsque chacune des surfaces S₁ et S₂ est en outre une portion de sphère, avec un centre de sphère qui est situé sur l'axe optique correspondant A₁ ou A₂, alors chaque surface dioptrique S₂ possède un plan moyen qui n'est pas parallèle au plan moyen de la portion de la surface dioptrique S₁ qui est traversée par un même faisceau de rayonnement que cette surface S₂. Pour cette raison, chaque surface dioptrique S₂ et la portion correspondante de la surface dioptrique S₁ produisent ensemble un pouvoir de déviation prismatique pour le faisceau de rayonnement qui les traverse. Un tel pouvoir de déviation prismatique résulte donc d'inclinaisons moyennes des deux surfaces dioptriques qui sont différentes. Pour le composant 1 représenté, la surface dioptrique S₁ est concave et sensiblement sphérique, et chaque surface dioptrique S₂ est convexe et sensiblement sphérique. Alors la déviation prismatique de chaque voie optique formée par l'une des surfaces dioptriques S₂ avec la portion correspondante de la surface dioptrique S₁ a pour effet d'écarter de l'axe optique A₂ de la surface dioptrique S₂ la direction moyenne de propagation d'un faisceau à ondes planes qui est incident parallèlement à cet axe optique.

Si la surface dioptrique S₁ et l'une des surfaces dioptriques S₂ ont des courbures identiques, pour le composant 1 de [FIG. 1a] et [FIG. 1b], alors une convergence ou divergence du faisceau de rayonnement n'est pas modifiée lorsqu'il traverse ces deux surfaces. A l'inverse, si la surface dioptrique S₁ et la surface dioptrique S₂ ont des courbures différentes, la convergence ou divergence du faisceau de rayonnement est modifiée lorsqu'il traverse les deux surfaces. Autrement dit, la voie optique qui est formée par ces deux surfaces dioptriques possède une valeur non-nulle de puissance optique. En particulier, la puissance optique de chaque voie optique du composant 1 est positive, correspondant à un effet de lentille convergente, lorsque le rayon de courbure de la surface dioptrique S₂ correspondante est plus petit que le rayon de courbure de la surface dioptrique S₁, ces rayons de courbure étant considérés en valeurs absolues.

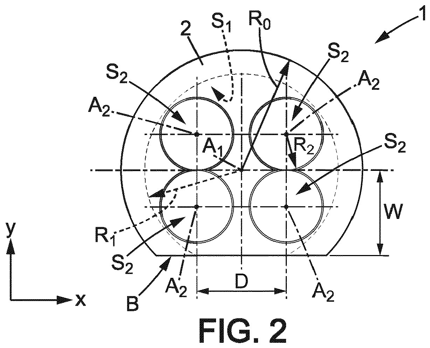

La variante de réalisation du composant 1 qui est illustrée par [FIG. 2] possède une nervure 2 qui est circulaire en dehors d'un segment de bord rectiligne B. Les surfaces dioptriques S₁ et S₂ ont chacune une limite périphérique qui est circulaire. De plus, les surfaces dioptriques S₂ ont des positions différentes selon les directions x et y par rapport à la surface dioptrique S₁ : deux surfaces dioptriques S₂ qui sont voisines selon la direction y sont tangentes, et deux surfaces dioptriques S₂ qui sont voisines selon la direction x sont espacées, l'ensemble des surfaces dioptriques S₂ étant réparti symétriquement par rapport à l'axe optique A₁.

A titre d'exemple, les dimensions suivantes peuvent être adoptées :
- rayon externe R₀ de la nervure 2 parallèlement au plan x-y : environ 8,4 mm ;
- rayon R₁ de la limite périphérique de la surface dioptrique S₁ parallèlement au plan x-y : environ 6,75 mm ;
- rayon R₂ de la limite périphérique de chaque surface dioptrique S₂ parallèlement au plan x-y : environ 2,5 mm ;
- distance D entre les axes optiques A₂ de deux surfaces dioptriques S₂ qui sont voisines selon la direction x : environ 6,25 mm ;
- distance entre les axes optiques A₂ de deux surfaces dioptriques S₂ qui sont voisines selon la direction y : environ 5,0 mm ;
- rayon de courbure de la surface dioptrique S₁, supposée à peu près sphérique et concave : environ 160 mm ;
- rayon de courbure de chaque surface dioptrique S₂, supposée à peu près sphérique et convexe : environ 83 mm ;
- épaisseur du composant 1, mesurée parallèlement à l'axe optique A₁ entre le pourtour de la surface dioptrique S₁ et le centre de chaque surface dioptrique S₂ : environ 0,50 mm : et
- distance W entre le segment de bord rectiligne B et l'axe optique A₁ : environ 5,95 mm.

A partir de ces dimensions, l'Homme du métier sait déterminer les valeurs du pouvoir de déviation prismatique et de la puissance optique de chaque voie optique du composant 1, soit par un calcul approximatif, soit par une méthode de tracé de rayons lumineux. Ces valeurs sont non-nulles pour les dimensions particulières indiquées ci-dessus.

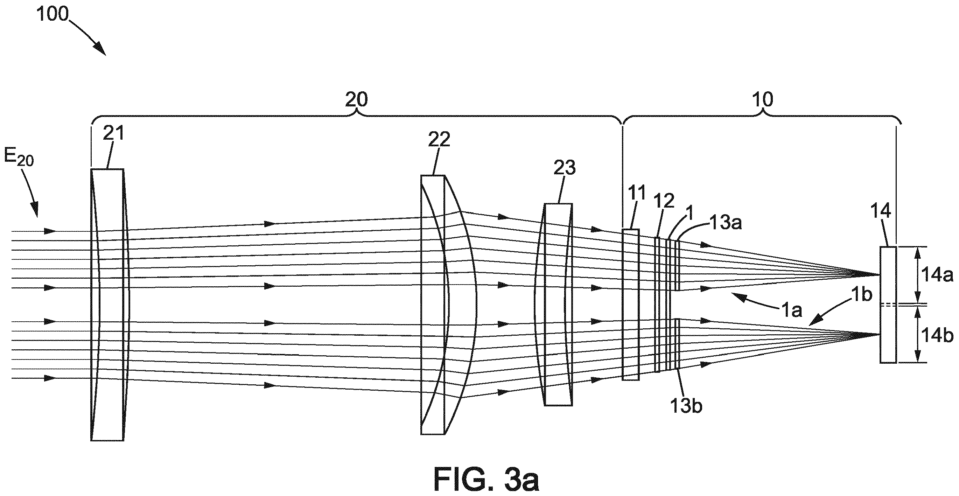

Conformément à [FIG. 3a], un instrument d'optique 100 comprend un module de détection 10 et un objectif 20 qui sont assemblés l'un avec l'autre d'une façon qui n'est pas représentée, par exemple à l'aide de bagues de montage ou tout autre dispositif de liaison.

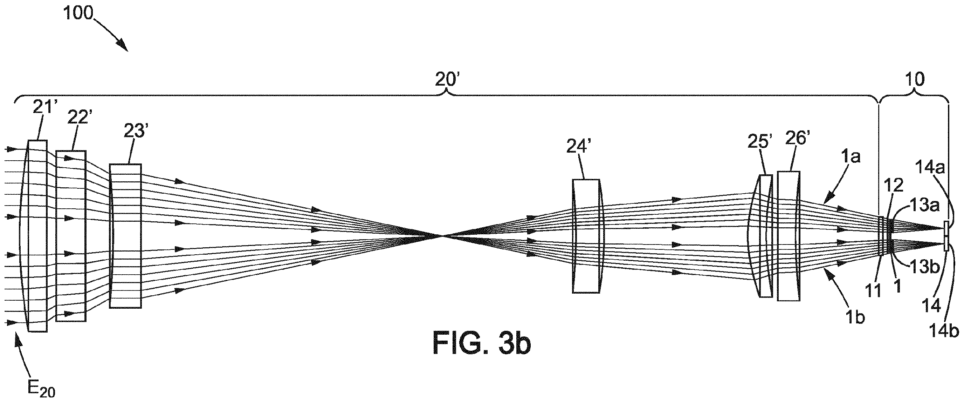

L'objectif 20 peut être d'un modèle à grand champ de vue de type rétrofocus avec une longueur focale de 39,5 mm comme représenté dans [FIG. 3a]. Toutefois, l'objectif 20 peut être interchangeable pour d'autres modèles, comme par exemple un objectif 20' à faible champ de vue de type ré-imageur avec une longueur focale de 158 mm, tel que représenté dans [FIG. 3b]. L'Homme du métier est capable de déterminer les données numériques des lentilles 21, 22 et 23 de l'objectif 20 représenté dans [FIG. 3a], ou des lentilles 21'-26' de l'objectif 20' représenté dans [FIG. 3b], et de même pour les lentilles de tout autre modèle d'objectif qui est destiné à être utilisé alternativement avec le module de détection 10. E₂₀ désigne l'entrée optique de l'objectif 20 ou 20'.

Le module de détection 10 qui est représenté dans [FIG. 3a] et [FIG. 3b] comprend, dans l'ordre selon le sens de propagation du rayonnement qui est transmis par l'objectif 20 ou 20' : un hublot 11, un filtre spectral à large bande 12, le composant optique 1 de [FIG. 2], des filtres spectraux à bandes étroites 13a, 13b,... et un photodétecteur matriciel 14. Le module de détection 10 et chaque objectif 20 ou 20' sont conçus pour que, lorsqu'ils sont assemblés ensemble de sorte que l'instrument 100 soit opérationnel, le composant optique 1 soit situé dans la pupille de sortie de l'objectif 20 ou 20'. Par ailleurs, les lentilles 21-23 de l'objectif 20, ou celles 21'-26' de l'objectif 20', ont des axes optiques respectifs qui sont confondus avec l'axe optique A₁ de la surface dioptrique S₁ du composant optique 1, et celui-ci passe de préférence par un centre géométrique de la surface photosensible du photodétecteur matriciel 14.

Au sein du module de détection 10, le composant optique 1 peut être disposé de sorte que sa surface dioptrique S₁ soit tournée vers l'objectif 20 ou 20', et les surfaces dioptriques S₂ déterminent les voies optiques de l'instrument 100. Les lentilles 21-23 de l'objectif 20 ou celles 21'-26' de l'objectif 20', le hublot 11, le filtre spectral à large bande 12 et le photodétecteur matriciel 14 sont communs aux quatre voies optiques. La surface photosensible du photodétecteur matriciel 14 est perpendiculaire à l'axe optique A₁, et située à environ 21,5 mm derrière le composant optique 1, de sorte qu'une portion 14a de la surface photosensible du photodétecteur matriciel 14 soit dédiée à la voie optique 1a, et une autre portion 14b de sa surface photosensible, disjointe de la portion 14a, soit dédiée à la voie optique 1b. Deux autres portions encore de la surface photosensible du photodétecteur matriciel 14, disjointes entre elles et des portions 14a et 14b, sont dédiées aux deux autres voies optiques (non représentées). Le filtre 13a est disposé sélectivement sur la voie optique 1a, le filtre 13b sur la voie optique 1b, et deux autres filtres spectraux à bandes étroites (non représentés) sur les deux autres voies optiques, un par voie optique. Les filtres spectraux à bandes étroites 13a, 13b,... peuvent avantageusement être assemblés en une matrice 2 x 2 au sein d'un composant rigide unique, facile à monter dans le module de détection 10. Notamment, les filtres 13a, 13b,... peuvent être soit maintenus individuellement dans une monture commune, soit aboutés par collage pour former une lame globale, soit réalisés par photolithographie et dépôts de couches minces sur une lame servant de substrat commun à ces filtres. Par exemple, chaque filtre spectral 13a, 13b,... peut avoir une épaisseur de 0,5 mm environ. Mais dans des modes de réalisation alternatifs, pouvant être plus adaptés en fonction de l'application de l'instrument 100, chaque filtre spectral 13a, 13b,... peut être solidaire du composant 1 en étant porté par l'une de ses surfaces dioptriques S₂.

De cette façon, les quatre voies optiques 1a, 1b,... forment simultanément des images respectives d'un même contenu du champ de vue de l'instrument 100 sur les portions correspondantes 14a, 14b,... de la surface photosensible du photodétecteur matriciel 14. Ces images, qui forment ensemble une image multispectrale à quatre composantes spectrales, une par voie optique, sont saisies simultanément lors d'une même séquence de fonctionnement du photodétecteur matriciel 14. Grâce à l'utilisation du composant optique 1, les quatre images sont nettes simultanément. Avec les valeurs numériques qui ont été citées en référence à [FIG. 2], l'instrument 100 possède une valeur globale de longueur focale de 25 mm lorsque l'objectif 20 à grand champ de vue de type rétrofocus à longueur focale de 39,5 mm est utilisé, et une valeur globale de longueur focale de 100 mm lorsque l'objectif 20' à faible champ de vue de type ré-imageur à longueur focale de 158 mm est utilisé. La distance entre la face antérieure du hublot 11 et la surface photosensible du photodétecteur matriciel 14 est d'environ 26,37 mm. Eventuellement, la forme des surfaces dioptriques S₂ du composant optique 1 peut être ajustée différemment entre des voies optiques différentes, en fonction de la bande spectrale étroite du filtre 13a, 13b,... de cette voie optique. En particulier, cet ajustement supplémentaire peut permettre de compenser des variations de valeurs des indices de réfraction des matériaux des lentilles 21-23 ou 21'-26' et du composant 1 en fonction de la longueur d'onde du rayonnement. [FIG. 3a] et [FIG. 3b] montrent en outre chacune un faisceau de rayonnement à ondes planes qui pénètre dans l'instrument 100 par l'entrée optique E₂₀, et qui est focalisé simultanément sur les portions 14a, 14b,... du photodétecteur 14.

Un tel instrument 100 peut être conçu pour fonctionner dans un des domaines spectraux visible, proche infrarouge connu sous l'acronyme NIR, ou dans le domaine SWIR. Dans ces cas, il peut ne pas être nécessaire de prévoir de refroidissement pour le module de détection 10.

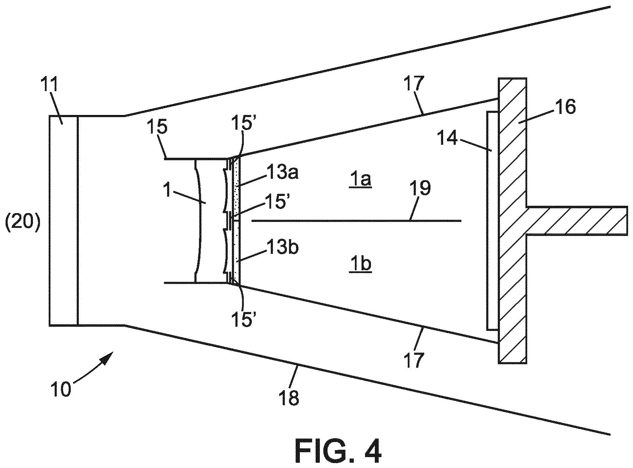

Alternativement, l'instrument 100 peut être conçu pour fonctionner dans un des domaines spectraux désignés par MWIR ou LWIR. Dans ces autres cas, il peut être nécessaire de prévoir un système de refroidissement du module de détection 10. [FIG. 4] montre une configuration possible pour un tel module de détection 10 destiné à être refroidi. Le photodétecteur matriciel 14 est fixé, par exemple par collage, sur un support 16, couramment appelé table froide ou doigt froid dans le jargon de l'Homme du métier, de façon à produire un bon contact thermique entre le photodétecteur 14 et le support 16. Le support 16 est en matériau conducteur thermique, et est couplé à une machine à froid (non représentée). Une paroi latérale 17 entoure la partie optique du module de détection 10, c'est-à-dire le composant 1, les filtres spectraux, notamment les filtres 13a, 13b,... qui sont dédiés individuellement à chaque voie optique 1a, 1b,..., et d'autres composants optionnels du module 10 tels que des diaphragmes, masques, parois séparatrices entre les voies optiques, etc. Une extrémité postérieure de la paroi latérale 17 est en contact thermique avec la table froide 16, pour être refroidie en même temps que cette dernière. Pour cette raison, la paroi latérale 17 est couramment appelée écran froid. En outre, l'ensemble qui vient d'être décrit, destiné à être refroidi, peut être contenu dans une enceinte à vide, qui constitue un cryostat. La paroi latérale 18 du cryostat n'est pas en contact thermique avec les parties destinées à être refroidies qui viennent d'être décrites, et elle est scellée de façon étanche par le hublot 11 du côté de l'objectif 20. Le hublot 11 est constitué d'un matériau qui est transparent pour le domaine spectral de fonctionnement de l'instrument 100.

Pour réduire des rayonnements parasites et/ou des images parasites qui pourraient dégrader la qualité des images formées par les voies optiques 1a, 1b,... sur le photodétecteur 14, le module de détection 10 peut comprendre en outre l'un au moins des éléments supplémentaires suivants :
- un limiteur de champ angulaire 15, qui peut être placé juste en amont du composant optique 1, selon le sens de propagation du rayonnement dans l'instrument 100. Un tel limiteur de champ angulaire peut avoir la forme d'un segment de tube ou d'un tronc de cône qui est coaxial avec l'axe optique A₁. Eventuellement, il peut être formé par un prolongement de l'écran froid 17 en amont du composant optique 1 ;
- un masque à ouvertures 15', par exemple entre le composant optique 1 et les filtres spectraux à bandes étroites 13a, 13b,..., pour occulter des parties du composant optique 1 qui sont intermédiaires entre deux surfaces dioptriques S₂ voisines, et éventuellement aussi une partie découverte de la nervure 2. Le masque 15' peut posséder une ouverture différente pour chaque voie optique 1a, 1b,..., qui est séparée de l'ouverture dédiée à chaque autre voie optique. Etant donné que le composant optique 1 est situé dans une pupille de sortie de l'objectif 20 ou 20', et lorsque le masque à ouvertures 15' est proche du composant optique 1, chacune de ses ouvertures détermine une pupille de la voie optique correspondante de l'instrument 100 ; et
- une matrice de parois séparatrices 19, dont chaque paroi 19 est disposée longitudinalement entre le composant optique 1 et le photodétecteur matriciel 14, ou entre les filtres spectraux à bandes étroites 13a, 13b,... d'une part et le photodétecteur 14 d'autre part, avec une paroi séparatrice entre deux voies optiques 1a, 1b,... qui sont voisines selon l'une quelconque des directions de la matrice des secondes surfaces dioptriques S₂ du composant optique 1.

Il est entendu que l'invention peut être reproduite en adaptant des caractéristiques secondaires de celle-ci par rapport aux modes de réalisation qui ont été décrits en détail ci-dessus. En particulier, le nombre des surfaces dioptriques S₂ et toutes les valeurs numériques qui ont été citées n'ont été indiqués qu'à titre d'illustration.

Enfin, d'autres instruments optiques qu'une unité de saisie d'images multispectrales telle que celle qui a été décrite en référence à [FIG. 3a], [FIG. 3b] et [FIG. 4] peuvent reproduire l'invention. En particulier, un tel autre instrument peut notamment être utilisé dans un spectromètre à voies multiples. Par exemple, chacune des voies optiques du spectromètre, telle que déterminée par un composant optique 1 conforme à l'invention, peut être dédiée à un intervalle spectral respectif, pour diriger le rayonnement de cet intervalle spectral vers un réseau de diffraction qui est adapté à cet intervalle.

L'invention peut encore être utilisée pour un système d'imagerie tridimensionnelle. Un tel système peut avoir une structure qui est similaire à celle de l'instrument 100 de [FIG. 3a] ou [FIG. 3b], mais sans que les filtres spectraux à bandes étroites 13a, 13b,... soient nécessaires pour la fonction d'imagerie tridimensionnelle. En outre, l'instrument est mis au point pour des éléments de scène à imager qui sont situés dans un intervalle limité de distance d'éloignement en avant de l'objectif. Toutes les voies optiques collectent alors simultanément des rayons lumineux qui sont issus d'un même élément de scène contenu dans le champ optique d'entrée de l'instrument. Mais les pupilles qui sont effectives pour des voies optiques différentes de l'instrument sont décalées entre elles transversalement. Pour cette raison, les images du même élément de scène qui sont formées respectivement par les voies optiques sont situées chacune à l'intérieur de la portion de la surface photosensible du photodétecteur qui correspond à la voie optique concernée, à un endroit dans cette portion de surface photosensible qui dépend de l'éloignement de l'élément de scène. En comparant les positions respectives de ces images formées par toutes les voies optiques, il est possible d'obtenir une estimation de la distance d'éloignement de l'élément de scène par rapport à l'instrument. Le fonctionnement d'imagerie tridimensionnelle que permet ainsi un instrument conforme à l'invention est de type acquisition stéréoscopique d'images.

## Revendications

1. Instrument (100) à plusieurs voies optiques, ayant un champ de vue qui est commun auxdites voies optiques, dans lequel les voies optiques sont disposées en parallèle, chacune entre une entrée optique (E₂₀) de l'instrument qui est commune auxdites voies optiques, et un photodétecteur matriciel (14) qui est aussi commun auxdites voies optiques, avec une portion (14a, 14b,...) dudit photodétecteur matriciel qui est dédiée à chaque voie optique de l'instrument séparément de chaque autre voie optique,
ledit instrument (100) comprenant un composant optique monolithique (1) à plusieurs voies qui est constitué d'une portion d'un matériau qui est transparent pour un rayonnement d'utilisation, ladite portion étant contenue entre deux faces du composant qui sont tournées chacune vers un côté opposé à l'autre face, de sorte que le rayonnement incident sur l'une des deux faces traverse la portion entre les deux côtés et ressorte par l'autre face,
une première des deux faces du composant (1) étant constituée par une première surface dioptrique (S₁) qui possède un axe optique (A₁),
l'autre face du composant (1), dite seconde face, comprenant plusieurs secondes surfaces dioptriques (S₂) qui sont juxtaposées sans recouvrement dans ladite seconde face, chaque seconde surface dioptrique possédant un autre axe optique (A₂) séparément de chaque autre seconde surface dioptrique, l'axe optique de l'une au moins des secondes surfaces dioptriques étant décalé par rapport à l'axe optique (A₁) de la première surface dioptrique (S₁),
les secondes surfaces dioptriques (S₂) étant réparties dans la seconde face du composant (1) de sorte qu'un rayon lumineux qui traverse la première surface dioptrique (S₁) ressorte du composant par au plus une des secondes surfaces dioptriques, chaque seconde surface dioptrique formant ainsi avec une portion respective de la première surface dioptrique une voie optique de transmission qui est séparée de chaque autre seconde surface dioptrique,
des valeurs respectives de courbure de la première surface dioptrique (S₁) et de chaque seconde surface dioptrique (S₂) du composant (1) étant non-nulles en au moins un point respectif de chacune des première et secondes surfaces dioptriques, de sorte que chacune de la première et des secondes surfaces dioptriques modifie individuellement une convergence d'un faisceau de rayonnement qui traverse ladite première ou seconde surface dioptrique au point correspondant à courbure non-nulle,
chaque voie optique du composant (1) dont l'axe optique (A₂) de seconde surface dioptrique (S₂) est décalé par rapport à l'axe optique (A₁) de la première surface dioptrique (S₁) produisant un pouvoir de déviation prismatique non-nul qui est aussi effectif pour le faisceau de rayonnement transmis par ladite voie optique entre les deux côtés du composant, et au moins une parmi la valeur et l'orientation du pouvoir de déviation prismatique étant différente entre au moins deux des voies optiques du composant,
le composant optique monolithique (1) à plusieurs voies étant disposé de sorte que chaque voie optique de transmission dudit composant soit dédiée à une des voies optiques de l'instrument (100),
l'instrument (100) comprenant en outre un objectif (20) et un module de détection (10) à plusieurs voies optiques (1a, 1b,...), l'objectif comprenant au moins une lentille (21-23) commune à toutes les voies optiques du module de détection, le module de détection comprenant le composant optique (1) et le photodétecteur matriciel (14), et étant couplé à l'objectif de sorte que ledit composant optique soit situé dans une pupille de sortie de l'objectif, et de sorte qu'une scène qui est contenue dans le champ de vue de l'instrument soit imagée à travers l'objectif et le composant optique, pour chaque voie optique, sur le photodétecteur matriciel.

2. Instrument (100) selon la revendication 1, dans lequel des valeurs respectives de courbure de la première surface dioptrique (S₁) et de chaque seconde surface dioptrique (S₂) du composant optique monolithique (1) sont telles que ledit composant possède, séparément pour chaque voie optique, une puissance optique non-nulle qui est effective pour le faisceau de rayonnement transmis par ladite voie optique entre les deux côtés du composant.

3. Instrument (100) selon la revendication 1 ou 2, dans lequel une au moins parmi la première surface dioptrique (S₁) et les secondes surfaces dioptriques (S₂) du composant optique monolithique (1) est de type surface libre, c'est-à-dire dépourvue d'axe de symétrie de révolution et dépourvue de centre de symétrie.

4. Instrument (100) selon l'une quelconque des revendications précédentes, dans lequel deux des voies optiques du composant optique monolithique (1) dont les axes optiques (A₂) respectifs de secondes surfaces dioptriques (S₂) sont décalés symétriquement par rapport à l'axe optique (A₁) de la première surface dioptrique (S₁), ont des puissances optiques qui sont égales, et ont des pouvoirs de déviation prismatique qui sont égaux en valeurs absolues mais orientés symétriquement par rapport audit axe optique de la première surface dioptrique.

5. Instrument (100) selon l'une quelconque des revendications précédentes, dans lequel les secondes surfaces dioptriques (S₂) du composant optique monolithique (1) sont juxtaposées dans la seconde face dudit composant pour former une matrice 2 x 2, 2 x 3, 3 x 3, 3 x 4, ou 4 x 4.

6. Instrument (100) selon l'une quelconque des revendications précédentes, comprenant en outre l'un au moins des éléments suivants :
- un limiteur de champ angulaire (15) disposé pour filtrer des rayons lumineux qui traversent le composant optique monolithique (1) en fonction de leur inclinaison par rapport à l'axe optique (A₁) de la première surface dioptrique (S₁) dudit composant, de sorte que les inclinaisons des rayons lumineux qui sont incidents sur ledit composant optique soient sélectivement inférieures à un seuil d'inclinaison déterminé par le limiteur de champ angulaire ;
- au moins un ensemble de parois séparatrices (19) qui est disposée entre le composant optique monolithique (1) et le photodétecteur matriciel (14), pour isoler des rayonnements qui sont transmis par des voies optiques (1a, 1b,...) différentes ; et
- un masque à ouvertures (15'), ledit masque possédant une ouverture par voie optique (1a, 1b,...) pour limiter une section transversale de ladite voie optique, et/ou masquer des zones du composant optique monolithique (1) qui ne sont pas utiles pour une fonction d'imagerie de l'instrument (100), et/ou supprimer des images parasites formées par du rayonnement n'ayant pas traversé les zones utiles du composant optique monolithique, et/ou déterminer des pupilles respectives des voies optiques de l'instrument.

7. Instrument (100) selon l'une quelconque des revendications 1 à 6, dans lequel au moins deux des secondes surfaces dioptriques (S₂) du composant optique monolithique (1) supportent des filtres spectraux respectifs, un filtre par seconde surface dioptrique, lesdits filtres ayant des caractéristiques spectrales de filtrage qui sont différentes entre deux desdites secondes surfaces dioptriques.

8. Instrument (100) selon l'une quelconque des revendications 1 à 6, dans lequel chaque voie optique dudit instrument comprend en plus de la portion (14a, 14b,...) correspondante du photodétecteur matriciel (14) et de la voie correspondante du composant optique monolithique (1), au moins un filtre (13a, 13b,...), ledit filtre déterminant une bande spectrale de transmission de ladite voie optique de l'instrument, qui est différente de la bande spectrale de transmission d'au moins une des autres voies optiques de l'instrument.

9. Instrument (100) selon la revendication 8, dans lequel deux des secondes surfaces dioptriques (S₂) qui sont associées à des filtres différents (13a, 13b,...) dans des voies optiques respectives, ont des courbures différentes pour compenser un chromatisme longitudinal effectif entre deux longueurs d'onde de rayonnement qui sont transmises chacune séparément par un desdits filtres.

10. Instrument (100) selon l'une quelconque des revendications précédentes, comprenant en outre une combinaison d'un cryostat et d'une machine à froid, et dans lequel, à l'intérieur du cryostat, le photodétecteur matriciel (14) est disposé sur un support (16) qui est couplé thermiquement à la machine à froid, et dans lequel le composant optique monolithique (1) à plusieurs voies est entouré latéralement par un écran (17) qui est en contact thermique avec le support du photodétecteur matriciel.

11. Instrument (100) selon l'une quelconque des revendications précédentes, formant une unité de saisie d'images multispectrales, ou une partie d'un spectromètre, ou une partie d'un système d'imagerie tridimensionnelle.

## Patentansprüche

1. Instrument mit mehreren optischen Wegen (100), umfassend ein Sichtfeld, das den optischen Wegen gemeinsam ist, wobei die optischen Wege parallel angeordnet sind, jeweils zwischen einem optischen Eingang (E₂₀) des Instruments, der den optischen Wegen gemeinsam ist, und einem Matrixphotodetektor (14), der den optischen Wegen ebenfalls gemeinsam ist, wobei ein Teil (14a, 14b,...) des Matrixphotodetektors jedem optischen Weg des Instruments getrennt von jedem anderen optischen Weg gewidmet ist,
wobei das Instrument (100) eine monolithische optische Komponente (1) mit mehreren Wegen umfasst, die aus einem Teil eines Materials besteht, das für Gebrauchsstrahlung transparent ist, wobei der Teil zwischen zwei Seiten der Komponente enthalten ist, die jeweils einer der anderen Seite gegenüberliegenden Seite zugewandt sind, so dass auf eine der beiden Seiten einfallende Strahlung durch den Abschnitt zwischen den beiden Seiten hindurchgeht und an der anderen Seite wieder austritt,
wobei eine erste der beiden Seiten der Komponente (1) durch eine erste dioptrische Fläche (S₁) gebildet wird, die eine optische Achse (A₁) aufweist,
wobei die andere Seite der Komponente (1), die sogenannte zweite Seite, mehrere zweite dioptrische Flächen (S₂) umfasst, die in der zweiten Seite überlappungsfrei nebeneinander liegen, wobei jede zweite dioptrische Fläche eine weitere optische Achse (A₂) getrennt von jeder anderen zweiten dioptrischen Fläche besitzt, wobei die optische Achse von wenigstens einer der zweiten dioptrischen Flächen gegenüber der optischen Achse (A₁) der ersten dioptrischen Fläche (S₁) versetzt ist, wobei die zweiten dioptrischen Flächen (S₂) über die zweite Seite der Komponente (1) verteilt sind, so dass ein Lichtstrahl, der durch die erste dioptrische Fläche (S₁) hindurchgeht, durch höchstens eine der zweiten dioptrischen Flächen aus der Komponente austritt, wobei jede zweite dioptrische Fläche mit einem entsprechenden Teil der ersten dioptrischen Fläche einen optischen Übertragungsweg bildet, der von jeder anderen zweiten dioptrischen Fläche getrennt ist,
wobei die jeweiligen Krümmungswerte der ersten dioptrischen Fläche (S₁) und jeder zweiten dioptrischen Fläche (S₂) der Komponente (1) an wenigstens einem jeweiligen Punkt jeder der ersten und zweiten dioptrischen Flächen von Null verschieden sind, so dass jede der ersten und zweiten dioptrischen Flächen individuell eine Konvergenz eines Strahlungsbündels modifiziert, das die erste oder zweite dioptrische Fläche an dem entsprechenden Punkt mit von Null verschiedener Krümmung durchläuft,
wobei jeder optische Weg der Komponente (1), dessen optische Achse (A₂) der zweiten dioptrischen Fläche (S₂) zuder optischen Achse (A₁) der ersten dioptrischen Fläche (S₁) versetzt ist, ein von Null verschiedenes prismatisches Ablenkvermögen erzeugt, das auch für den durch den optischen Weg zwischen den beiden Seiten der Komponente übertragenen Strahlungsstrahl wirksam ist, und wobei wenigstens einer aus Wert und Ausrichtung des prismatischen Ablenkvermögens zwischen wenigstens zwei der optischen Wege der Komponente verschieden ist, wobei die monolithische optische Komponente (1) mit mehreren Wegen derart angeordnet ist, dass jeder optische Übertragungsweg der Komponente einem der optischen Wege des Instruments (100) zugeordnet ist,
wobei das Instrument (100) ferner ein Objektiv (20) und ein Erfassungsmodul (10) mit mehreren optischen Wegen (1a, 1b,...) umfasst, wobei das Objektiv wenigstens eine Linse (21-23) umfasst, die allen optischen Wegen des Erfassungsmoduls gemeinsam ist, wobei das Erfassungsmodul die optische Komponente (1) und den Matrixphotodetektor (14) umfasst und mit dem Objektiv gekoppelt ist, so dass die optische Komponente in einer Austrittspupille des Objektivs angeordnet ist, und so dass eine Szene, die im Sichtfeld des Instruments enthalten ist, durch das Objektiv und die optische Komponente für jeden optischen Weg auf den Matrixphotodetektor abgebildet wird.

2. Instrument (100) nach Anspruch 1, wobei die jeweiligen Krümmungswerte der ersten dioptrischen Fläche (S1) und jeder zweiten dioptrischen Fläche (S2) der monolithischen optischen Komponente (1) derart sind, dass die Komponente separat für jeden optischen Pfad eine von Null verschiedene optische Leistung besitzt, die für das Strahlenbündel wirksam ist, das durch den optischen Pfad zwischen den beiden Seiten der Komponente übertragen wird.

3. Instrument (100) nach Anspruch 1 oder 2, wobei wenigstens eine aus erster dioptrischer Fläche (S₁) und zweiter dioptrischer Fläche (S₂) der monolithischen optischen Komponente (1) vom Typ freie Fläche ist, d. h. ohne Rotationssymmetrieachse und ohne Symmetriezentrum.

4. Instrument (100) nach einem der vorhergehenden Ansprüche, wobei zwei der optischen Wege der monolithischen optischen Komponente (1), deren jeweilige optische Achsen (A₂) der zweiten dioptrischen Flächen (S₂) symmetrisch zur optischen Achse (A₁) der ersten dioptrischen Fläche (S₁) versetzt sind, optische Leistungen aufweisen, die derjenigen der zweiten dioptrischen Fläche (S₂) entsprechen und prismatische Ablenkungskräfte aufweisen, die in absoluten Werten gleich sind, aber symmetrisch zur optischen Achse der ersten dioptrischen Fläche ausgerichtet sind.

5. Instrument (100) nach einem der vorhergehenden Ansprüche, wobei die zweiten dioptrischen Flächen (S₂) der monolithischen optischen Komponente (1) an der zweiten Seite der Komponente nebeneinander angeordnet sind, um eine 2 x 2, 2 x 3, 3 x 3, 3 x 4 oder 4 × 4 Matrix zu bilden.

6. Instrument (100) nach einem der vorhergehenden Ansprüche, das ferner eines oder mehrere der folgenden Elemente umfasst:
- einen Winkelfeldbegrenzer (15), der derart angeordnet ist, dass er Lichtstrahlen, die durch die monolithische optische Komponente (1) hindurchgehen, in Abhängigkeit von ihrer Neigung in Bezug auf die optische Achse (A₁) der ersten dioptrischen Fläche (Si) der Komponente filtert, so dass die Neigungen der Lichtstrahlen, die auf die optische Komponente einfallen, selektiv kleiner sind als eine Neigungsschwelle, die durch den Winkelfeldbegrenzer bestimmt wird;
- wenigstens einen Satz von Trennwänden (19), der zwischen der monolithischen optischen Komponente (1) und dem Matrixphotodetektor (14) angeordnet ist, um Strahlung zu isolieren, die durch verschiedene optische Wege (1a, 1b, ...) übertragen wird; und
- eine Maske mit Öffnungen (15'), wobei die Maske eine Öffnung pro optischem Weg (1a, 1b,...) aufweist, um einen Querschnitt des optischen Wegs zu begrenzen und/oder Bereiche der monolithischen optischen Komponente (1) zu maskieren, die für eine Abbildungsfunktion des Instruments (100) nicht nützlich sind, und/oder Störbilder zu unterdrücken, die durch Strahlung gebildet werden, die nicht durch die nützlichen Bereiche der monolithischen optischen Komponente hindurchgegangen ist, und/oder jeweilige Pupillen der optischen Wege des Instruments zu bestimmen.

7. Instrument (100) nach einem der Ansprüche 1 bis 6, wobei wenigstens zwei der zweiten dioptrischen Flächen (S₂) der monolithischen optischen Komponente (1) entsprechende Spektralfilter tragen, einen Filter pro zweiter dioptrischer Fläche, wobei die Filter spektrale Filtercharakteristiken aufweisen, die zwischen zwei der zweiten dioptrischen Flächen unterschiedlich sind.

8. Instrument (100) nach einem der Ansprüche 1 bis 6, wobei jeder optische Weg des Instruments zusätzlich zu dem entsprechenden Abschnitt (14a, 14b, ...) des Matrixphotodetektors (14) und dem entsprechenden Weg der monolithischen optischen Komponente (1) wenigstens einen Filter (13a, 13b, ...) umfasst, wobei der Filter ein spektrales Transmissionsband des optischen Wegs des Instruments bestimmt, das sich von dem spektralen Transmissionsband wenigstens eines der anderen optischen Wege des Instruments unterscheidet.

9. Instrument (100) nach Anspruch 8, wobei zwei der zweiten dioptrischen Flächen (S₂), die verschiedenen Filtern (13a, 13b, ...) in jeweiligen optischen Wegen zugeordnet sind, unterschiedliche Krümmungen aufweisen, um einen effektiven Längschromatismus zwischen zwei Strahlungswellenlängen zu kompensieren, die jeweils getrennt von einem der Filter übertragen werden.

10. Instrument (100) nach einem der vorstehenden Ansprüche, ferner umfassend eine Kombination aus einem Kryostaten und einer Kältemaschine, wobei der Matrixphotodetektor (14) im Kryostaten auf einem Träger (16) angeordnet ist, der thermisch mit der Kältemaschine gekoppelt ist, und wobei die monolithische optische Komponente (1) mit mehreren Wegen seitlich von einer Abschirmung (17) umgeben ist, die in thermischem Kontakt mit dem Träger des Matrixphotodetektors steht.

11. Instrument (100) nach einem der vorhergehenden Ansprüche, das eine multispektrale Bilderfassungseinheit oder einen Teil eines Spektrometers oder einen Teil eines dreidimensionalen Abbildungssystems bildet.

## Claims

1. An instrument (100) with multiple optical paths, having a field of view which is shared by said optical paths, wherein the optical paths are arranged in parallel, each between an optical entrance (E₂₀) of the instrument which is shared by said optical paths, and a matrix photodetector (14) which is also shared by said optical paths, with a portion (14a, 14b,...) of said matrix photodetector which is dedicated to each optical path separately from any other optical path, wherein
said instrument (100) comprises a multipath, monolithic optical component (1) which is made up of a portion of a material which is transparent to a use radiation, said portion being contained between two faces of the component which are each turned towards a side opposite the other face, so that the radiation incident on one of the two faces passes through the portion between both sides and exits through the other face,
a first one of the two faces of the component (1) is formed by a first refracting surface (S₁) which has an optical axis (A₁),
the other face of the component (1), referred to as second face, comprises several second refracting surfaces (S₂) which are juxtaposed without overlap in said second face, each second refracting surface having another optical axis (A₂) separately from each other second refracting surface, where the optical axis of at least one of the second refracting surfaces is offset relative to the optical axis (A₁) of the first refracting surface (S₁),
the second refracting surfaces (S₂) are distributed in the second face of the component (1) so that a light ray which passes through the first refracting surface (S₁) exits from the component through at most one of the second refracting surfaces, each second refracting surface thus forming with a respective portion of the first refracting surface an optical path for transmission which is separated from each other second refracting surface,
respective curvature values of the first refracting surface (S₁) and each second refracting surface (S₂) of the component (1) are non-zero at at least one respective point of each of the first and second refracting surfaces, so that each of the first and second refracting surfaces individually modifies a convergence of a radiation beam which passes through said first or second refracting surface at the point corresponding to the non-zero curvature,
each optical path of the optical component (1) for which the optical axis (A₂) of the second refracting surface (S₂) is offset relative to the optical axis (A₁) of the first refracting surface (S₁) produces a non-zero prismatic deflecting power which is also effective for the radiation beam transmitted by said optical path between both sides of the component, and at least one among the value and the orientation of the prismatic deflecting power is different between at least two of the optical paths of the component,
the multipath, monolithic optical component (1) is arranged so that each optical transmission path of said component is dedicated to one of the optical paths of the instrument (100),
the instrument (100) further comprising an objective (20) and a detection module (10) with multiple optical paths (1a, 1b,...), the objective comprising at least one lens (21-23) which is shared by all the optical paths of the detection module, the detection module comprising the optical component (1) and the matrix photodetector (14), and being coupled to the objective so that said optical component is located in an exit pupil of the objective, and so that a scene which is contained in the field of view of the instrument is imaged through the objective of the optical component, for each optical path, onto the matrix photodetector.

2. The instrument (100) according to claim 1, wherein respective curvature values of the first refracting surface (S₁) and each second refracting surface (S₂) of the monolithic optical component (1) are such that said component has, separately for each optical path, a non-zero optical power which is effective for the radiation beam transmitted by said optical path between both sides of the component.

3. The instrument (100) according to claim 1 or 2, wherein at least one among the first refracting surface (S₁) and the second refracting surfaces (S₂) of the monolithic optical component (1) is of free-surface type, i.e. without any axis of symmetry of revolution and without any center of symmetry.

4. The instrument (100) according to any one of the preceding claims, wherein two of the optical paths of the optical component (1) for which the respective optical axes (A₂) of the second refracting surfaces (S₂) are symmetrically offset relative to the optical axis (A₁) of the first refracting surface (S₁), have optical powers which are equal and have prismatic deflecting powers which are equal in absolute value but oriented symmetrically relative to said optical axis of the first refracting surface.

5. The instrument (100) according to any one of the preceding claims, wherein the second refracting surfaces (S₂) of the monolithic optical component (1) are juxtaposed in the second face of said component in order to form a 2x2, 2x3, 3x3, 3x4 or 4x4 matrix.

6. The instrument (100) according to any one of the preceding claims, further comprising at least one of the following elements:
- an angular field limiter (15) arranged for filtering light rays which pass through the monolithic optical component (1) according to the inclination thereof relative to the optical axis (A₁) of the first refracting surface (S₁) of said component, so that the inclinations of the light rays which are incident on said optical component are selectively less than an inclination threshold set by the angular field limiter;
- at least one set of separating walls (19) which is arranged between the monolithic optical component (1) and the matrix photodetector (14) in order to isolate radiations that are transmitted by different optical paths (1a, 1b,...); and
- a mask with openings (15'), said mask having one opening per optical path (1a, 1b,...) in order to limit a transverse section of said optical path, and/or to mask zones of the monolithic optical component (1) which are not useful for an imaging function of the instrument (100), and/or to eliminate parasitic images formed by radiation not having passed through the useful zones of the monolithic optical component, and/or to set respective pupils of the optical paths of the instrument.

7. The instrument (100) according to any one of claims 1 to 6, wherein at least two of the second refracting surfaces (S₂) of the monolithic optical component (1) carry respective spectral filters, one filter per second refracting surface, said filters having spectral filtering features which are different between two of said second refracting surfaces.

8. The instrument (100) according to any one of claims 1 to 6, wherein each optical path of said instrument comprises at least one filter (13a, 13b,...) in addition to the corresponding portion (14a, 14b,...) of the matrix photodetector (14) and to the corresponding path of the monolithic optical component (1), said filter determining a spectral transmission band of said optical path of the instrument, which is different from the spectral transmission band of at least one of the other optical paths of the instrument.

9. The instrument (100) according to claim 8, wherein two of the second refracting surfaces (S₂), which are associated with different filters (13a, 13b,...) in respective optical paths, have different curvatures in order to compensate for an longitudinal chromatism that is effective between two wavelengths of radiation which are each transmitted separately by one of said filters.

10. The instrument (100) according to any one of the preceding claims, further comprising a combination of a cryostat and a cooling machine, and wherein, inside the cryostat, the matrix photodetector (14) is arranged on a support (16) which is thermally coupled to the cooling machine, and wherein the multipath, monolithic optical component (1) is surrounded laterally by a screen (17) which is in thermal contact with the support of the matrix photodetector.

11. The instrument (100) according to the any one of the preceding claims, forming a multispectral image capture unit, or a part of a spectrometer, or a part of a three-dimensional imaging system.
